# EUROPÄISCHE PATENTSCHRIFT

(11) **EP 1 172 648 B1**
(45) Veröffentlichungstag und Bekanntmachung des Hinweises auf die Patenterteilung: **14.11.2007**
(21) Anmeldenummer: 00114841.0
(22) Anmeldetag: 11.07.2000
(51) Int. Cl.: G01N 27/30

(54) **Bezugselektrode zur Verwendung mit einer Messelektrode in einer potentiometrischen Messkette**
Reference electrode to be used with a measuring electrode in a potentiometric measuring system
Electrode de référence utilisable avec une électrode de mesure dans une chaîne de mesure potentiométrique

(43) Veröffentlichungstag der Anmeldung: 16.01.2002
(73) Patentinhaber: Endress + Hauser Conducta Gesellschaft für Mess- und Regeltechnik mbH + Co.KG., 70839 Gerlingen (DE)
(72) Erfinder: Franzheld, Rainer, Dr., D-04736 Waldheim (DE); Scholz, Katrin, Dr., D-09600 Naundorf (DE)
(74) Vertreter: Hahn, Christian

(56) Entgegenhaltungen:
- DE-A- 3 415 089
- US-A- 4 279 728
- US-A- 4 401 548
- US-A- 5 360 529

## Beschreibung

Die vorliegende Erfindung betrifft eine Bezugselektrode zur Verwendung mit einer Messelektrode in einer potentiometrischen Messkette zur Bestimmung der Ionenkonzentration in einer Messlösung, gemäss Anspruch 1.

Die Erfindung betrifft außerdem eine potentiometrische Messkette zur Bestimmung der Ionenkonzentration in einer Messlösung, wobei die Messkette eine Messelektrode und eine Bezugselektrode aufweist.

Eine Bezugselektrode ist eine elektrochemische Halbzelle, die ein möglichst konstantes Referenzpotential liefert. Die Bezugselektrode kann als eine eigenständige Einheit oder als Teil einer kombinierten Elektrode einer Messkette, z. B. einer Einstabmesskette, ausgebildet sein. Die Bezugselektrode kann in einer Messkette mit einer Messelektrode zur Bestimmung der Ionenaktivität in einer Messlösung eingesetzt werden.

Das Elektrodenelement ist üblicherweise als ein Metalldraht ausgebildet. Es sind Bezugselektroden 1. und 2. Art bekannt. Bei Elektroden 1. Art ist das Elektrodenelement unmittelbar in einen Elektrolyten getaucht, der Ionen des Metalles enthält. In Kombination mit einer zweiten Elektrode werden Metallionen gebildet oder verbraucht. Das Elektrodenpotential ist veränderlich. Bei Elektroden 2. Art ist im Bereich des Elektrodenelements eine die Elektrode 2. Art bildende schwerlösliche Verbindung von Ionen des Metalls des Elektrodenelements angeordnet.

Das Potential einer Elektrode 2. Art ist proportional zu der Konzentration des in der schwerlöslichen Verbindung enthaltenen Anions in der umgebenden Messlösung. Das Potential wird insbesondere dadurch konstant gehalten, dass dieses Anion in hoher Konzentration in dem das Elektrodenelement umgebenden Elektrolyten vorhanden ist und konstant gehalten wird. Dafür kann ein Vorrat des in dem Elektrolyten gelösten Salzes vorgehalten werden. Auf diese Weise kann die Konzentration des Elektrolyten auf einem konstant hohen Niveau und somit auch das Referenzpotential auf einem konstanten Wert gehalten werden.

Damit sich das Potential der Bezugselektrode auch bei extremen Temperaturschwankungen reproduzierbar einstellen kann, muss gewährleistet sein, dass die Sättigungsvorgänge in dem Elektrolyten, z. B. Auflösen von AgCl bei höheren Temperaturen und Ausfällen bei niedrigeren Temperaturen, hysteresefrei ablaufen. Deshalb wird im Bereich des Kontaktierungsbereichs des Elektrodenelements ein Vorrat einer eine Elektrode 2. Art bildenden schwerlöslichen Verbindung, z. B. AgCl, vorgehalten.

Das Prinzip der Messung der Ionenkonzentration in einer Messlösung mit Hilfe einer potentiometrischen Messkette ist aus dem Stand der Technik bekannt. Es ist bspw. beschrieben in "Abwasser - Mess- und Regeltechnik", Hrsg. Endress+Hauser Holding AG, 1. Auflage, 2. Ausgabe, S. 83 bis S. 93, worauf ausdrücklich Bezug genommen wird. Das Messprinzip beruht auf der sog. Nernst'schen Gleichung, die in der einschlägigen Fachliteratur ausführlich diskutiert ist (vgl. bspw. Galster, Helmuth, "pH-Messung: Grundlagen, Methoden, Anwendungen, Geräte", Weinheim: VCH, 1990, Kapitel 1.6, S. 20 ff., auf das hier ausdrücklich Bezug genommen wird). Taucht man ein Metall in eine Lösung seiner Ionen, nimmt es gegenüber der Lösung ein Potential an, dessen Grösse gemäß der Nernst'schen Gleichung gegeben ist durch die Konzentration der Metallionen in der Lösung (genauer durch die Aktivität dieser Ionen an der Grenzfläche Metall-Lösung), die Temperatur (absolut gemessen) und eine Stoffkonstante (das temperaturabhängige Normalpotential).

Das Prinzip jeder potentiometrischen Messung beruht darauf, dass man aus der Grösse des Potentials auf die Konzentration der Metallionen in der Lösung schließt. Da aber Potentiale selbst nicht messbar sind, schaltet man gegen die Messelektrode, die in die zu messende Lösung taucht, die Bezugselektrode mit einem genau bekannten und konstanten Referenzpotential und misst die Potentialdifferenz als elektromotorische Kraft (EMK) des entstandenen galvanischen Elements.

Aus der gemessenen EMK lässt sich die Konzentration der Metallionen in der Lösung ermitteln, indem man das Potential der Bezugselektrode von der EMK subtrahiert. Aus dem so erhalten Potential lässt sich bei bekanntem Normalpotential die gesuchte Konzentration aus der Nernst'schen Gleichung ermitteln.

Auch die Messung des pH-Wertes einer Lösung kann auf potentiometrischem Wege nach diesem Prinzip erfolgen. An die Stelle der Metall-Elektrode tritt eine Platin-Wasserstoff-Elektrode, d. h. ein mit Wasserstoff beladenes Platinblech. Der in dem Platin gelöste Wasserstoff nimmt im elektrochemischen Sinne metallischen Charakter an, und die Elektrode verhält sich so als ob der Wasserstoff als Metall vorläge.

Diese Elektrode gestattet in der beschriebenen Weise, die Wasserstoff-Ionenkonzentration zu messen. Sie ist von prinzipieller Bedeutung für alle pH-Messungen, da sie zur Definition des pH-Wertes in wässrigen Lösungen herangezogen wurde. Das Normalpotential von Wasserstoff wird bei der Platin-Wasserstoff-Elektrode für alle Temperaturen willkürlich gleich Null gesetzt.

Für Betriebsmessungen sowie für die meisten Labormessungen ist das Arbeiten mit der Platin-Wasserstoff-Elektrode nicht nur sehr unbequem, sondern oft sogar unmöglich. Man benutzt deshalb heute fast ausschließlich für anspruchsvolle Messungen eine Glaselektrode, die bezüglich Genauigkeit der Platin-Wasserstoff-Elektrode entspricht.

Die Wirkungsweise der Glaselektrode beruht darauf, dass es Gläser gibt, die gegenüber wässrigen Lösungen ein Potential ausbilden, das gemäss der Nernst'schen Gleichung von der Wasserstoff-Ionenkonzentration der Lösung abhängig ist. Beim Aufbau einer Glaselektrodenmesskette wird zwischen eine Messkette aus zwei Metallelektroden eine Glasmembrane aus Elektrodenglas geschaltet. An den beiden Grenzflächen Glas-Wasser bilden sich pH-abhängige Potentiale aus, die sich zu den beiden Metall-Potentialen addieren. Wenn die Metall-Potentiale bekannt sind, kann man die Differenz der Glaspotentiale aus der Gesamt-EMK der Messkette ermitteln.

Wenn ein relativ lang ausgebildetes Elektrodenelement in den Elektrolyten eintaucht, kann es durch unterschiedliche Diffusionsvorgänge und damit einhergehende Unterschiede in der Konzentration in dem Elektrolyten zu Mischpotentialen entlang des Elektrodenelements und damit zu einem instabilen Referenzpotential der Bezugselektrode kommen. Dies wirkt sich negativ auf die Genauigkeit der Messung der Ionenkonzentration aus.

U.S. Patent Nr. 4,279,728 offenbart eine Vorrichtung zur Bestimmung der Ionenkonzentration. Das Referenzelektrodenelement ist bis auf einen Kontaktbereich mit Farbe beschichtet oder von einer Hülse umgeben. Fraglich ist einerseits die Beständigkeit der Farbe, und andererseits ob ein Referenzelektrolyt in die Hülse gelangen kann.

U.S. Patent Nr. 5,360,529, U.S. Patent Nr. 4,401,548 und U.S. Patent Nr. 5,470,453 offenbaren jeweils Bezugselektroden, bei denen die Flüssig-Elektrolyte in einer Polymermatrix fixiert sind.

Der vorliegenden Erfindung liegt deshalb die Aufgabe zu Grunde, die Genauigkeit der Messung der Ionenkonzentration in einer Messlösung mit Hilfe einer potentiometrischen Messkette zu verbessern.

Zur Lösung dieser Aufgabe schlägt die Erfindung ausgehend von der Bezugselektrode der eingangs genannten Art vor, dass die erste Kammer und die zweite Kammer derart ausgebildet sind, dass eine elektrische Verbindung zwischen der ersten Kammer und der zweiten Kammer ausschliesslich über die mindestens eine Öffnung gegeben ist, und das Elektrodenelement bis auf einen Kontaktierungsbereich von einer elektrisch isolierenden Ummantelung umgeben ist, wobei der Kontaktierungsbereich des Elektrodenelements zu der oder jeder Öffnung in Richtung der Längsachse axial versetzt angeordnet ist, wobei der Bereich des Elektrodenelements, mit dem es mit dem Elektrolyten in Kontakt tritt möglichst reduziert und damit die Potentialbildung auf ein kleines Volumen begrenzt wird. Dadurch kann eine Mischpotentialbildung und ein instabiles Referenzpotential verhindert werden, was zu einer wesentlich genaueren Messung führt.

Das Volumen, in dem eine Potentialbildung stattfindet, erstreckt sich im Wesentlichen um das Elektrodenelement herum, wo das Element aus der Ummantelung herausragt. An den ummantelten Bereichen des Elements kommt es zu keiner Reaktion mit dem Elektrolyten. Durch die Ummantelung ist eine besonders einfache und effektive Begrenzung der mit dem Elektrolyten in Reaktion tretenden Bereiche des Elektrodenelements möglich. Das gesamte Elektrodenelement kann aus einem einheitlichen Metalldraht oder ähnlichem gefertigt werden.

Die Ummantelung kann bspw. als eine elektrische Isolation des Elektrodenelements ausgebildet sein. Es versteht sich, dass die Ummantelung aus einem gegenüber dem Elektrolyten inerten Material bestehen muss. Gemäss der vorliegenden Erfindung wird jedoch vorgeschlagen, dass die Ummantelung als ein mit einem elektrischen Isolator gefüllter Kolben ausgebildet ist, wobei die Ummantelung erfindungsgemäß als ein nach unten offener, luftgefüllter Kolben ausgebildet ist, aus dem unten der Kontaktierungsbereich des Elektrodenelements herausragt. Vorteilhafterweise besteht der Kolben aus Glas oder Kunststoff, Nach oben ist der Kolben vorzugsweise geschlossen. Das Verschliessen des Kolbens nach oben kann bspw. durch Verkleben oder Verschmelzen erfolgen. An der Oberseite des Kolbens ist das Elektrodenelement aus dem Kolben herausgeführt. Als elektrischer Isolator dient bei diesem Ausführungsbeispiel die zwischen der Innenseite des Kolbens und dem Elektrodenelement eingeschlossene Luft.

Erfindungsgemäß ist in der zweiten Kammer ein nicht fließfähiges Polymer (z. B. ein Gel) angeordnet, in dessen Poren der zweite Elektrolyt eingeschlossen ist. Dadurch kann verhindert werden, dass beim Auf-den-Kopf-Stellen der Bezugselektrode die Luft aus dem Kolben entweichen und Elektrolyt zwischen das Elektrodenelement und die Kolbenwandung gelangen kann. Außerdem können durch die Fixierung des Elektrolyten in dem Polymer die Diffusionsprozesse verzögert, die Sättigungsvorgänge in dem Elektrolyten, z. B. Auflösen von AgCl bei höheren Temperaturen und Ausfällen bei niedrigeren Temperaturen, reproduzierbar ablaufen. Der zweite Elektrolyt ist vorzugsweise als eine Salzlösung definierter Konzentration ausgebildet. Ein typischer Elektrolyt ist bspw. Kaliumchlorid (KCl).

Gemäss einer weiteren bevorzugten Ausführungsform der vorliegenden Erfindung wird vorgeschlagen, dass in der zweiten Kammer ein Vorrat einer eine Elektrode 2. Art bildenden schwerlöslichen Verbindung angeordnet ist, in die der Kontaktierungsbereich des Elektrodenelements zumindest teilweise hineinragt. Bei einem Elektrodenelement aus Silber und einer KCl-Lösung als Elektrolyt ist die schwerlösliche Verbindung bspw. als Silberchlorid (AgCl) ausgebildet. Durch den AgCl-Vorrat in der zweiten Kammer kann sichergestellt werden, dass die Sättigungsvorgänge in dem Elektrolyten, z. B. Auflösen von AgCl bei höheren Temperaturen und Ausfällen bei niedrigeren Temperaturen, hysteresefrei ablaufen. Das führt dazu, dass sich das Potential der Bezugselektrode auch bei extremen Temperaturschwankungen reproduzierbar einstellen kann.

Der notwendige Vorrat der die Elektrode 2. Art bildenden schwerlöslichen Verbindung (z. B. AgCl) kann durch Schüttung feiner Körner auf dem Boden der zweiten Kammer hergestellt werden. Zur Verbesserung der Kontaktierung des Elektrodenelements mit dem Vorrat kann der Kontaktierungsbereich des Elektrodenelements in dem Vorrat spiralförmig ausgebildet sein.

Alternativ kann der notwendige Vorrat auch durch Tauchen des Elektrodenelements in eine Schmelze der schwerlöslichen Verbindung unmittelbar auf den Kontaktierungsbereich aufgebracht werden. Dazu wird vorgeschlagen, dass das nicht fließfähige Polymer mit der Salzlösung unmittelbar in dem Kontaktierungsbereich des Elektrodenelements auspolymerisiert ist.

Gemäß einer anderen vorteilhaften Weiterbildung der vorliegenden Erfindung wird vorgeschlagen, dass die erste Kammer von einem ersten Rohr mit einem ersten Querschnitt und die zweite Kammer von einem nach unten geschlossenen zweiten Rohr mit einem zweiten Querschnitt gebildet ist, wobei der zweite Querschnitt kleiner als der erste Querschnitt ist und das zweite Rohr innerhalb des ersten Rohres koaxial angeordnet ist.

Das zweite Rohr ist vorteilhafterweise nach oben geschlossen und die Öffnung in der Wandung des zweiten Rohres ausgebildet. Alternativ kann das zweite Rohr auch nach oben offen ausgebildet sein, wobei die obere Öffnung des zweiten Rohres die Öffnung zwischen der ersten und der zweiten Kammer bildet.

Das erste Rohr ist vorteilhafterweise nach unten geschlossen und das Diaphragma in der Wandung des ersten Rohres ausgebildet. Alternativ kann das erste Rohr auch nach unten offen ausgebildet sein, wobei in der unteren Öffnung das Diaphragma angeordnet ist. Das Diaphragma kann ringförmig ausgebildet sein, wobei dann in dem zentralen Ringloch des Diaphragmas das zweite Rohr der zweiten Kammer ausgebildet ist.

Gemäß einer bevorzugten Ausführungsform der vorliegenden Erfindung ist die zweite Kammer innerhalb der Wandung des ersten Rohrs ausgebildet. Dann ist der Kolben vorteilhafterweise als ein drittes nach oben abgeschlossenes Rohr mit einem dritten kreisförmigen Querschnitt ausgebildet, das in dem zweiten Rohr koaxial angeordnet ist.

Alternativ wird vorgeschlagen, dass die zweite Kammer zwischen der Wandung des ersten Rohrs und der Wandung des zweiten Rohrs ausgebildet ist. Dann sollte vorzugsweise die Wandung des ersten Rohrs gegenüber der Wandung des zweiten Rohrs abgedichtet sein.

Die beiden oben beschriebenen Alternativen der erfindungsgemäßen Bezugselektrode stellen eine besonders platzsparende Konstruktion dar, die es ermöglicht, die Bezugselektrode auf besonders einfache und kostengünstige Weise mit einem möglichst geringen Durchmesser zu realisieren.

Schließlich wird gemäß einer anderen Weiterbildung der vorliegenden Erfindung vorgeschlagen, dass in der ersten Kammer eine Ionensperre angeordnet ist, die ein Eindringen von Elektrodengiften aus der Messlösung in den ersten Elektrolyten oder ein Vordringen von Ionen aus der zweiten Kammer zu dem Diaphragma verhindert. Die Elektronengifte oder die Ionen werden in der Ionensperre eingelagert oder reagieren mit der Ionensperre zu anderen Verbindungen, durch die die Messlösung nicht vergiftet bzw. das Diaphragma nicht verstopft.

Als eine weitere Lösung der Aufgabe der vorliegenden Erfindung wird ausgehend von der potentiometrische Messkette der eingangs genannten Art vorgeschlagen, dass die Bezugselektrode nach einem der Ansprüche 1 bis 12 ausgebildet ist.

Gemäß einer vorteilhaften Weiterbildung der vorliegenden Erfindung wird vorgeschlagen, dass die Messelektrode ein viertes nach unten abgeschlossenes Rohr mit einem vierten kreisförmigen Querschnitt aufweist, wobei der vierte Querschnitt kleiner ist als der zweite Querschnitt und das vierte Rohr in dem ersten Rohr und dem zweiten Rohr koaxial angeordnet ist und unten aus dem ersten Rohr und aus dem zweiten Rohr herausragt, wobei die Wandung des vierten Rohrs gegenüber der Wandung des ersten Rohrs und/oder der Wandung des zweiten Rohrs abgedichtet ist.

Gemäß einer bevorzugten Ausführungsform der Erfindung wird vorgeschlagen, dass die Wandungen der Rohre an den abgedichteten Stellen miteinander verschmolzen sind.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellte sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Fig. 1: eine Bezugselektrode gemäß einer ersten bevorzugten Ausführungsform der Erfindung;
- Fig. 2: eine Bezugselektrode gemäß einer zweiten bevorzugten Ausführungsform der Erfindung;
- Fig. 3: eine potentiometrische Messkette gemäß einer ersten bevorzugten Ausführungsform der Erfindung;
- Fig. 4: eine potentiometrische Messkette gemäß einer zweiten bevorzugten Ausführungsform der Erfindung; und
- Fig. 5: eine potentiometrische Messkette gemäß einer dritten bevorzugten Ausführungsform der Erfindung.

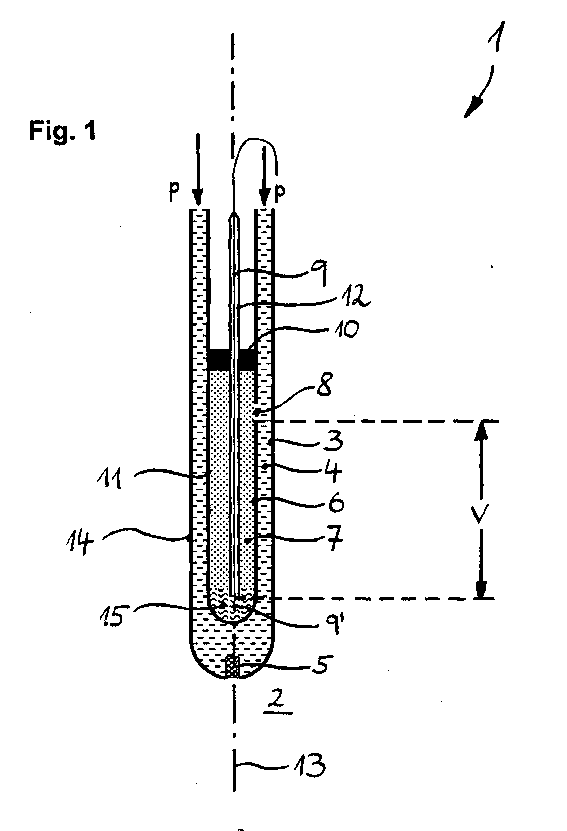

In Fig. 1 ist eine erfindungsgemäße Bezugselektrode in ihrer Gesamtheit mit dem Bezugszeichen 1 bezeichnet. Die Bezugselektrode 1 ist eine elektrochemische Halbzelle, die ein möglichst konstantes Referenzpotential liefert. Die Bezugselektrode 1 kann in einer Messkette zusammen mit einer Messelektrode zur Bestimmung der Ionenaktivität in einer Messlösung 2 eingesetzt werden.

Die Bezugselektrode 1 weist eine erste Kammer 3 auf, die mit einem ersten Elektrolyten 4 gefüllt ist. Bei dem Ausführungsbeispiel aus Fig. 1 ist die erste Kammer 3 als die äußere Kammer der Bezugselektrode 1 ausgebildet. Die erste Kammer 3 steht über ein Diaphragma 5 mit der Messlösung 2 in Verbindung. Durch einen geeigneten Überdruck p fließt durch das Diaphragma 5 ständig Elektrolyt 4 aus, so dass die Eindiffusion von Elektrodengiften weitgehend unterbunden wird. Die Bezugselektrode 1 weist außerdem eine zweite Kammer 6 auf, die mit einem zweiten Elektrolyten 7 gefüllt ist. Bei dem Ausführungsbeispiel aus Fig. 1 ist die zweite Kammer 6 als die innere Kammer der Bezugselektrode 1 ausgebildet. Die zweite Kammer 6 ist nach oben durch einen Verschluss 10 verschlossen und steht über eine Öffnung 8 mit dem ersten Elektrolyt 4 in Kontakt. Die erste Kammer 3 und die zweite Kammer 6 besteht aus einem unten verschlossenen Rohr. Die Bezugselektrode 1 weist schließlich ein Elektrodenelement 9 auf, das zumindest teilweise mit dem zweiten Elektrolyten 7 in Kontakt steht. Das Elektrodenelement 9 steht über den zweiten Elektrolyten 7, die Öffnung 8, den ersten Elektrolyten 4 und das Diaphragma 5 mit der Messflüssigkeit 2 in Kontakt.

Die erste Kammer 3 und die zweite Kammer 6 sind derart ausgebildet, dass eine elektrische Verbindung zwischen der ersten Kammer 3 und der zweiten Kammer 6 ausschließlich über die Öffnung 8 gegeben ist. Die Wandung 11 der zweiten Kammer 6 ist also aus einem elektrisch isolierenden Material, z. B. Glas oder Kunststoff, gefertigt. Auch die Wandung 14 der ersten Kammer 3 besteht aus Glas oder Kunststoff. Das Elektrodenelement 9 ist bis auf einen Kontaktierungsbereich 9' von einer elektrisch isolierenden Ummantelung 12 umgeben. Dadurch können die für die Potentialbildung wichtigen Diffusionsvorgänge in der Bezugselektrode 1 auf ein kleines Volumen begrenzt werden. Der Kontaktierungsbereich 9' des Elektrodenelements 9 ist zu der Öffnung 8 in Richtung der Längsachse 13 - in dem vorliegenden Ausführungsbeispiel um den Versatz v - axial versetzt angeordnet ist.

Als erster Elektrolyt 4 und als zweiter Elektrolyt 7 wird in dem vorliegenden Ausführungsbeispiel eine Kaliumchlorid (KCl)-Lösung mit einer Konzentration von etwa 3 mol/l verwendet. Selbstverständlich können als Elektrolyten 4, 7 auch andere Lösungen mit einer beliebigen Konzentration verwendet werden. Das Diaphragma 5 besteht aus einem geeigneten Material, bspw. aus Keramik, Glasfaser oder Platinfaser. Das Elektrodenelement 9 ist in dem vorliegenden Fall einer Elektrode 2. Art aus Silber (Ag)/Silberchlorid (AgCl) als ein Silber (Ag)-Draht ausgebildet. Die Ummantelung 12 ist als ein nach oben verschlossener aber nach unten offener, luftgefüllter Kolben aus Glas oder Kunststoff ausgebildet. Die Oberseite der Ummantelung 12 kann bspw. durch Verkleben oder Verschmelzen verschlossen werden. In der zweiten Kammer 6 ist unten ein Vorrat 15 an Silberchlorid (AgCl) angeordnet, in den der Kontaktierungsbereich 9' hineinragt. Der Vorrat 15 wird durch Schüttung von feinkörnigem AgCl am Boden der zweiten Kammer 6 hergestellt. Dadurch kann sichergestellt werden, dass die Sättigungsvorgänge in dem Elektrolyten 7, z. B. Auflösen von AgCl bei höheren Temperaturen und Ausfällen bei niedrigeren Temperaturen, hysteresefrei und reproduzierbar ablaufen. Zur besseren Kontaktierung zwischen dem Elektrodenelement 9 und dem Vorrat 15 kann der Kontaktierungsbereich 9' in dem Vorrat 15 spiralförmig verlaufen.

Die zweite Kammer 6 ist mit einem hochviskosen Gel gefüllt, dessen Poren mit einer Konzentration des Elektrolyten 7 von 3 mol/l gefüllt sind. Durch die Fixierung des Elektrolyten 7 in dem Gel sind die Diffusionsprozesse verzögert, wobei das Auflösen und Ausfällen des AgCl trotzdem reproduzierbar ablaufen kann. Der Kontaktbereich 9' des Elektrodenelements 9 steht in Kontakt zu einem Elektrolyten 7, in dem die Konzentrationsverhältnisse nahezu den thermodynamisch vorgegebenen Gleichgewichten entsprechen.

Bei der erfindungsgemäßen Bezugselektrode 1 ist der Kontaktierungsbereich 9' des Elektrodenelements 9, mit dem es mit dem Elektrolyten 7 in Kontakt tritt, relativ klein, wodurch die Potentialbildung auf ein kleines Volumen begrenzt wird. Auf diese Weise kann eine Mischpotentialbildung und ein instabiles Referenzpotential verhindert werden, was zu einer wesentlich genaueren Messung führt. Außerdem ist der Weg von dem Kontaktierungsbereich 9', über die Öffnung 8, das Diaphragma 5 zu der Messlösung 2 relativ lang. Dadurch kann in vorteilhafter Weise die Diffusionszeit, die Ag⁺-Ionen und [AgCl₄₋ₙ]⁽³⁻ⁿ⁾⁻-Komplexe auf Ihrem Weg von dem Kontaktierungsbereich 9' zu dem Diaphragma 5 bzw. Elektrodengifte von der Messlösung 2 zu dem Kontaktierungsbereich 9' benötigen, und damit auch die Lebensdauer der erfindungsgemäßen Bezugselektrode 1 entscheidend erhöht werden.

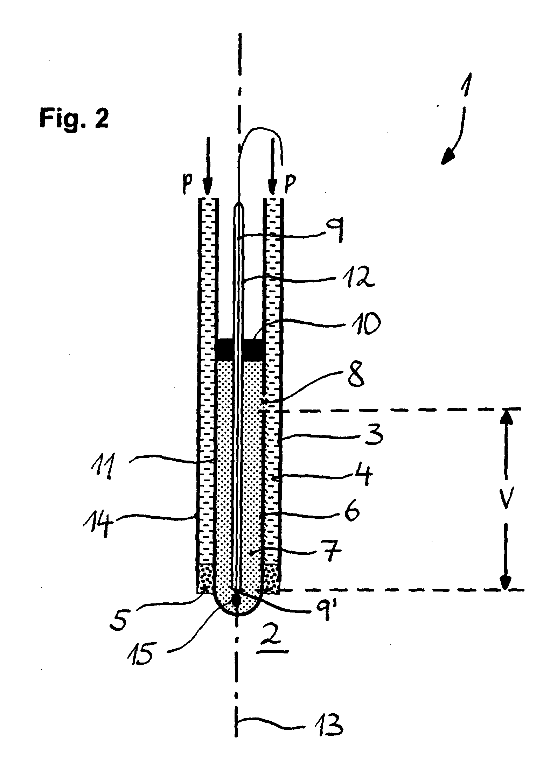

In Fig. 2 ist ein weiteres Ausführungsbeispiel einer erfindungsgemäßen Bezugselektrode 2 dargestellt. Dabei besteht die erste Kammer 3 aus einem nach unten offenen Rohr. Die zweite Kammer 6 besteht nach wie vor aus einem nach unten geschlossenen Rohr. Das Diaphragma 5 besteht bspw. aus Polytetrafluorethylen (Teflon) und ist ringförmig ausgebildet.

Durch die zentrale Öffnung des Diaphragma 5 erstreckt sich die zweite Kammer 6. Die Wandungen 11, 14 sind gegenüber dem Diaphragma 5 abgedichtet. Der erste Elektrolyt 4 in der ersten Kammer 3 ist als ein hochviskoses Gel mit geringem Ausfluss ausgebildet. Dadurch ist die erfindungsgemäße Bezugselektrode 1 wesentlich wartungsärmer als eine mit einem flüssigen Elektrolyten gefüllte Elektrode. Die Elektrode 2. Art ist in einer Variante ausgeführt, dass der notwendige AgCl-Vorrat 15 durch Tauchen in eine AgCl-Schmelze auf den Kontaktierungsbereich 9' des Elektrodenelements 9 aufgebracht ist.

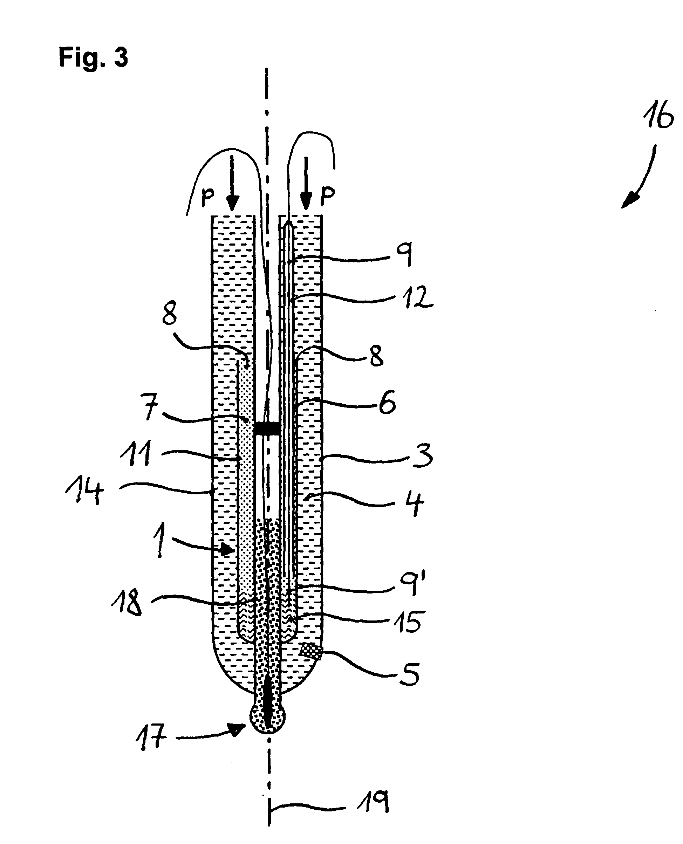

In Fig. 3 ist eine potentiometrische Messkette 16 zur Bestimmung der Ionenkonzentration in der Messlösung 2 gemäß einer ersten Ausführungsform dargestellt. Die Messkette 16 umfasst eine Messelektrode 17 und eine erfindungsgemäße Bezugselektrode 1. Die Messelektrode 17 weist ein nach unten abgeschlossenes Rohr auf. Das Rohr der Messelektrode 17 weist einen kleineren Querschnitt auf als der das Rohr der zweiten Kammer 6. Die Messelektrode 17 ist koaxial zu der ersten Kammer 3 und der zweiten Kammer 6 angeordnet, verläuft durch die beiden Kammern 3, 6 hindurch und ragt unten aus der Messkette 16 heraus und in die Messlösung 2 hinein. Die Wandungen 11, 14 sind gegenüber der Wandung 18 der Messelektrode 17 abgedichtet, bspw. verklebt oder verschmolzen. Die Wandung 18 der Messelektrode 17 besteht aus Glas oder Kunststoff. Die zweite Kammer 6 erstreckt sich hohlzylinderförmig um die Messelektrode 17 herum. Das Elektrodenelement 9 ist samt seiner Ummantelung 12 versetzt zu der Längsachse 19 der Messkette 16 in der zweiten Kammer 6 angeordnet. Die Öffnung 8 zwischen der ersten Kammer 3 und der zweiten Kammer 6 wird durch die Öffnung am oberen Ende des Rohres der zweiten Kammer 6 gebildet. Die erste Kammer 3 ist mit einem flüssigen Elektrolyten 4 und die zweite Kammer 6 mit einem gallertartigen Elektrolyten 7 befüllt. Die Messelektrode 17 ist als eine Glaselektrode mit Innenpuffer und entsprechender innerer Ableitung ausgebildet.

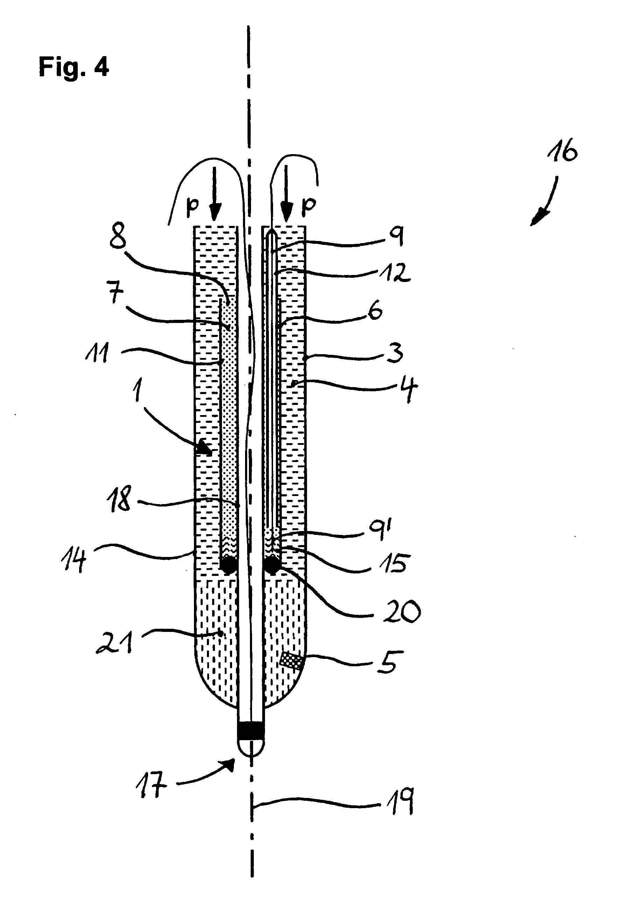

In Fig. 4 ist eine potentiometrische Messkette 16 gemäß einer zweiten Ausführungsform dargestellt. Die zweite Kammer 6 umfasst ein sowohl nach oben als auch nach unten offenes Rohr auf, das unten mittels eines entsprechenden Dichtelements 20 - z. B. einen O-Ring - gegenüber der Wandung 18 der Messelektrode 17 und der ersten Kammer 3 abgedichtet ist. Bei der Fertigung einer derart ausgebildeten Messkette 16 kann vor der Montage des Rohrs der zweiten Kammer 3 in den Bodenbereich der ersten Kammer 3 ein beliebiges Wirkelement eingebracht werden. Danach kann dann das Rohr der zweiten Kammer 3 mit dem Dichtelement 20 auf die Messelektrode 17 geschoben und gegenüber der Wandung 18 abgedichtet werden. Das Wirkelement kann bspw. als ein elektrolytbildendes Salz ausgebildet sein, um in einer Messlösung 2 mit einer niedrigen Leitfähigkeit ein Auslaugen des Elektrolyten 4, 7 zu verhindern. Das Wirkelement kann auch als eine Ionensperre 21 ausgebildet sein, die ein Eindringen von Elektrodengiften aus der Messlösung 2 in den ersten Elektrolyten 4 oder ein Vordringen von Ionen (Ag⁺) aus der zweiten Kammer 6 zu dem Diaphragma 5 und ein Verstopfen des Diaphragma 5 verhindert. In dem vorliegenden Ausführungsbeispiel sind aber der AgCl-Vorrat 15 und die Ionensperre 21 räumlich weit voneinander entfernt, so dass die Ionensperre 21 eine gerichtete Diffusion von Ag⁺-Ionen gar nicht oder nur in geringem Masse stimuliert. Die Messelektrode 17 ist in diesem Ausführungsbeispiel als eine Redoxelektrode ausgebildet und lediglich schematisch dargestellt.

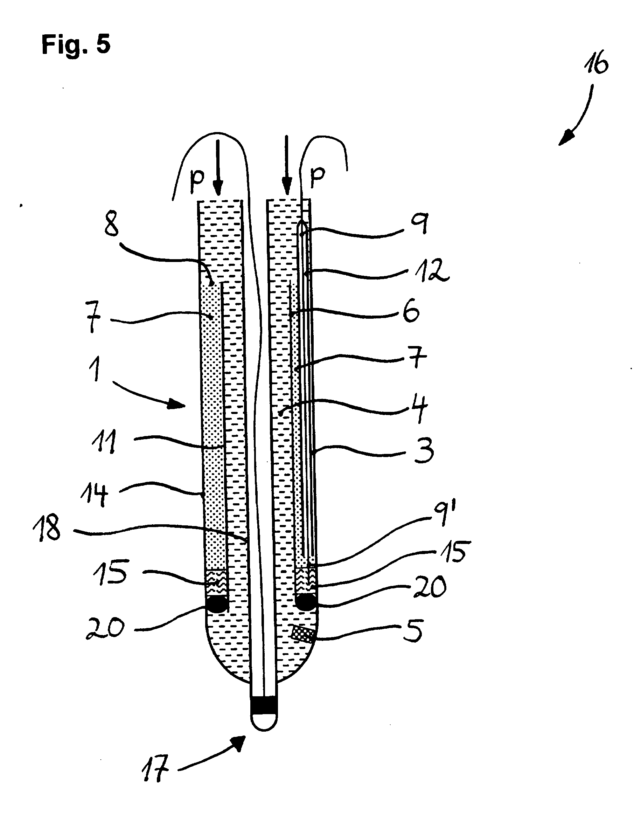

Fig. 5 zeigt ein drittes Ausführungsbeispiel einer erfindungsgemäßen Messkette 16. Auch bei diesem Ausführungsbeispiel erstreckt sich dabei die zweite Kammer 6 hohlzylinderförmig um die Messelektrode 17 herum. Als wichtigster Unterschied zu den vorangegangenen Ausführungsbeispielen ist die zweite Kammer 6 jedoch zwischen der Wandung 11 und der Wandung 14 ausgebildet. Die Wandung 11 der zweiten Kammer 6 ist nicht gegenüber der Wandung 18 der Messelektrode 17, sondern gegenüber der Wandung 14 der ersten Kammer 3 mit den Dichtungselementen 20 abgedichtet.

## Patentansprüche

1. Bezugselektrode (1) zur Verwendung mit einer Messelektrode (17) in einer potentiometrischen Messkette (16) zur Bestimmung der Ionenkonzentration in einer Messlösung (2), wobei die Bezugselektrode (1) aufweist:-
eine mit einem ersten Elektrolyten (4) gefüllte erste Kammer (3), die über mindestens ein Diaphragma (5) mit der Messlösung (2) in Verbindung steht,
eine mit einem zweiten Elektrolyten (7) gefüllte zweite Kammer (6), die über mindestens eine Öffnung (8) mit dem ersten Elektrolyten (4) in Kontakt steht, und
ein Elektrodenelement (9), das zumindest teilweise mit dem zweiten Elektrolyten (7) in Kontakt steht,
**dadurch gekennzeichnet, dass**
die erste Kammer (3) und die zweite Kammer (6) derart ausgebildet sind, dass eine elektrische Verbindung zwischen der ersten Kammer (3) und der zweiten Kammer (6) ausschliesslich über die mindestens eine Öffnung (8) gegeben ist, und das Elektrodenelement (9) bis auf einen Kontaktierungsbereich (9') in der zweiten Kammer von einer elektrisch isolierenden Ummantelung (12) umgeben ist,
wobei die Ummantelung in der zweiten Kammer den mit dem zweiten Elektrolyten in Reaktion tretenden Kontaktierungsbereich des Elektrodenelements begrenzt, und das Volumen, in dem eine Potentialbildung stattfindet, sich im Wesentlichen um den Kontaktierungsbereich herum erstreckt, in dem das Element aus der Ummantelung herausragt,
wobei der Kontaktierungsbereich (9') des Elektrodenelements (9) zu der oder jeder Öffnung (8) in Richtung der Längsachse (13, 19) axial versetzt angeordnet ist; **dadurch gekennzeichnet, dass**
die Ummantelung (12) als ein nach unten offener, luftgefüllter Kolben ausgebildet ist, aus dem unten der Kontaktierungsbereich (9') des Elektrodenelements (9) herausragt, und
in der zweiten Kammer (6) ein nicht fliessfähiges Polymer angeordnet ist, in dessen Poren der zweite Elektrolyt (7) eingeschlossen ist.

2. Bezugselektrode (1) nach Anspruch1, **dadurch gekennzeichnet, dass** der zweite Elektrolyt (7) als eine Salzlösung definierter Konzentration ausgebildet ist.

3. Bezugselektrode (1) nach anspruch 1 oder 2, **dadurch gekennzeichnet, dass** in der zweiten Kammer (6) ein Vorrat (15) einer eine Elektrode 2. Art bildenden schwerlöslichen Verbindung angeordnet ist, in die der Kontaktierungsbereich (9') des Elektrodenelements (9) zumindest teilweise hineinragt.

4. Bezugselektrode (1) nach Anspruch 3, **dadurch gekennzeichnet, dass** das nicht fliessfähige Polymer mit der Salzlösung unmittelbar in dem Kontaktierungsbereich (9') des Elektrodenelements (9) auspolymerisiert ist.

5. Bezugselektrode (1) nach einem der Ansprüche 1 bis 4, **dadurch gekennzeichnet, dass** die erste Kammer (3) von einem ersten Rohr mit einem ersten Querschnitt und die zweite Kammer (6) von einem nach unten geschlossenen zweiten Rohr mit einem zweiten Querschnitt gebildet ist, wobei der zweite Querschnitt kleiner als der erste Querschnitt ist und das zweite Rohr innerhalb des ersten Rohres koaxial angeordnet ist.

6. Bezugselektrode (1) nach Anspruch 5, **dadurch gekennzeichnet, dass** das zweite Rohr nach oben geschlossen und die Öffnung (8) in der Wandung (11) des zweiten Rohres ausgebildet ist.

7. Bezugselektrode (1) nach Anspruch 5 oder 6, **dadurch gekennzeichnet, dass** das erste Rohr nach unten geschlossen und das Diaphragma (5) in der Wandung (14) des ersten Rohres ausgebildet ist.

8. Bezugselektrode (1) nach einem der Ansprüche 5 bis 7, **dadurch gekennzeichnet, dass** die zweite Kammer (6) innerhalb der Wandung (11) des ersten Rohrs ausgebildet ist.

9. Bezugselektrode (1) nach Anspruch 8, **dadurch gekennzeichnet, dass** der Kolben als ein drittes nach oben abgeschlossenes Rohr mit einem dritten kreisförmigen Querschnitt ausgebildet ist, das in dem zweiten Rohr koaxial angeordnet ist.

10. Bezugselektrode (1) nach einem der Ansprüche 5 bis 7, **dadurch gekennzeichnet, dass** die zweite Kammer (6) zwischen der Wandung (14) des ersten Rohrs und der Wandung (11) des zweiten Rohrs ausgebildet ist.

11. Bezugselektrode (1) nach Anspruch 10, **dadurch gekennzeichnet, dass** die Wandung (14) des ersten Rohrs gegenüber der Wandung (11) des zweiten Rohrs abgedichtet ist.

12. Bezugselektrode (1) nach einem der Ansprüche 1 bis 11, **dadurch gekennzeichnet, dass** in der ersten Kammer (3) eine Ionensperre (21) angeordnet ist, die ein Eindringen von Elektrodengiften aus der Messlösung (2) in den ersten Elektrolyten (4) oder ein Vordringen von Ionen aus der zweiten Kammer (6) zu dem Diaphragma (5) verhindert.

13. Potentiometrische Messkette (16) zur Bestimmung der Ionenkonzentration in einer Messlösung (2), wobei die Messkette (16) eine Messelektrode (17) und eine Bezugselektrode (1) aufweist, **dadurch gekennzeichnet, dass** die Bezugselektrode (1) nach einem der Ansprüche 1 bis 12 ausgebildet ist.

14. Messkette (16) nach Anspruch 13, **dadurch gekennzeichnet, dass** die Messelektrode (17) ein viertes nach unten abgeschlossenes Rohr mit einem vierten kreisförmigen Querschnitt aufweist, wobei der vierte Querschnitt kleiner ist als der zweite Querschnitt und das vierte Rohr in dem ersten Rohr und dem zweiten Rohr koaxial angeordnet ist und unten aus dem ersten Rohr und aus dem zweiten Rohr herausragt, wobei die Wandung (18) des vierten Rohrs gegenüber der Wandung (14) des ersten Rohrs und/oder der Wandung (11) des zweiten Rohrs abgedichtet ist.

15. Messkette nach Anspruch 13 oder 14, **dadurch gekennzeichnet, dass** die Wandungen (11, 14, 18) der Rohre an den abgedichteten Stellen miteinander verschmolzen sind.

## Claims

1. A reference electrode (1) for use with a measuring electrode (17) in a potentiometric measuring sequence (16) for determining the ion concentration in a measuring solution (2), wherein the reference electrode (1) comprises:
a first chamber (3) which is filled with a first electrolyte (4) and which is connected to the measuring solution (2) by way of at least one diaphragm (5),
a second chamber (6) which is filled with a second electrolyte (7) and which is in contact with the first electrolyte (4) by way of at least one opening (8), and
an electrode element (9) which is in contact with the second electrolyte (7) at least in part,
**characterized in that**
the first chamber (3) and the second chamber (6) are designed in such a way that an electrical connexion between the first chamber (3) and the second chamber (6) is made exclusively by way of the at least one opening (8), and the electrode element (9) is surrounded by an electrically insulating cladding (12) apart from a contacting region (9') in the second chamber,
wherein the cladding in the second chamber bounds the contacting region of the electrode element reacting with the second electrolyte, and the volume in which a potential formation occurs extends substantially around the contacting region in which the element projects out of the cladding,
wherein the contacting region (9') of the electrode element (9) is arranged axially offset with respect to the opening (8) or each opening (8) in the direction of the longitudinal axis (13, 19), **characterized in that**
the cladding (12) is constructed in the form of an air-filled piston which is open at the bottom and out of which the contacting region (9') of the electrode element (9) projects at the bottom, and
a polymer, which is not free-flowing and in the pores of which the second electrolyte (7) is enclosed, is arranged in the second chamber (6).

2. A reference electrode (1) according to Claim 1, **characterized in that** the second electrolyte (7) is in the form of a salt solution of defined concentration.

3. A reference electrode (1) according to Claim 1 or 2, **characterized in that** a store (15) of a poorly soluble compound, which forms an electrode of a 2nd type and into which the contacting region (9') of the electrode element (9) projects at least in part, is arranged in the second chamber (6).

4. A reference electrode (1) according to Claim 3, **characterized in that** the polymer which is not free-flowing is polymerized out with the salt solution directly in the contacting region (9') of the electrode element (9).

5. A reference electrode (1) according to any one of Claims 1 to 4, **characterized in that** the first chamber (3) is formed by a first tube with a first cross-section and the second chamber (6) is formed by a second tube closed at the bottom and with a second cross-section, wherein the second cross-section is smaller than the first cross-section and the second tube is arranged coaxially inside the first tube.

6. A reference electrode (1) according to Claim 5, **characterized in that** the second tube is closed at the top and the opening (8) is formed in the wall (11) of the second tube.

7. A reference electrode (1) according to Claim 5 or 6, **characterized in that** the first tube is closed at the bottom and the diaphragm (5) is formed in the wall (14) of the first tube.

8. A reference electrode (1) according to any one of Claims 5 to 7, **characterized in that** the second chamber (6) is formed inside the wall (11) of the first tube.

9. A reference electrode (1) according to Claim 8, **characterized in that** the piston is constructed in the form of a third tube with a third circular cross-section, which third tube is closed off at the top and is arranged coaxially in the second tube.

10. A reference electrode (1) according to any one of Claims 5 to 7, **characterized in that** the second chamber (6) is formed between the wall (14) of the first tube and the wall (11) of the second tube.

11. A reference electrode (1) according to Claim 10, **characterized in that** the wall (14) of the first tube is sealed off from the wall (11) of the second tube.

12. A reference electrode (1) according to any one of Claims 1 to 11, **characterized in that** an ion barrier (21), which prevents the penetration of electrode poisons from the measuring solution (2) into the first electrolyte (4) or the advance of ions from the second chamber (6) to the diaphragm (5), is arranged in the first chamber (3).

13. A potentiometric measuring sequence (16) for determining the ion concentration in a measuring solution (2), wherein the measuring sequence (16) comprises a measuring electrode (17) and a reference electrode (1), **characterized in that** the reference electrode (1) is designed according to any one of Claims 1 to 12.

14. A measuring sequence (16) according to Claim 13, **characterized in that** the measuring electrode (17) comprises a fourth tube closed off at the bottom and with a fourth circular cross-section, wherein the fourth cross-section is smaller than the second cross-section and the fourth tube is arranged coaxially in the first tube and the second tube and projects out of the first tube and out of the second tube at the bottom, wherein the wall (18) of the fourth tube is sealed off from the wall (14) of the first tube and/or the wall (11) of the second tube.

15. A measuring sequence according to Claim 13 or 14, **characterized in that** the walls (11, 14, 18) of the tubes are fused with one another at the sealed-off points.

## Revendications

1. Électrode de référence (1) destinée à être utilisée avec une électrode de mesure (17) dans une chaîne de mesure potentiométrique (16), destinée à la détermination de la concentration d'ions dans une solution de mesure (2), l'électrode de référence (1) comportant :
une première chambre (3) remplie d'un premier électrolyte (4), qui est en relation avec la solution de mesure (2) par l'intermédiaire d'au moins un diaphragme (5),
une deuxième chambre (6) remplie d'un deuxième électrolyte (7), qui est en contact avec l'électrolyte (4) par l'intermédiaire d'au moins une ouverture (8), et
un élément d'électrode (9), qui est au moins partiellement en contact avec le deuxième électrolyte (7),
**caractérisée en ce que**
la première chambre (3) et la deuxième chambre (6) sont conçues de telle manière à former une liaison électrique entre la première chambre (3) et la deuxième chambre (6), exclusivement à travers au moins l'ouverture (8), et **en ce que** l'élément d'électrode (9), hormis une zone de contact (9'), est entouré dans la deuxième chambre d'une enveloppe (12) électriquement isolante,
l'enveloppe dans la deuxième chambre limitant la zone de contact de l'élément d'électrode entrant en réaction avec le deuxième électrolyte, et le volume, dans lequel a lieu une formation de potentiel, s'étendant pour l'essentiel autour de la zone de contact, dans laquelle l'élément sort de l'enveloppe,
la zone de contact (9') de l'élément d'électrode (9) étant disposée de façon décalée axialement, en direction de l'axe longitudinal (13, 19), par rapport à cette ou chaque ouverture (8) ; **caractérisée en ce que**
l'enveloppe (12) est conçue sous la forme d'un piston rempli d'air, ouvert vers le bas, à partir duquel la zone de contact (9') de l'élément d'électrode (9) sort vers le bas, et **en ce qu'**est disposé dans la deuxième chambre (6) un polymère non fluide, dans les pores duquel est enfermé le deuxième électrolyte (7).

2. Électrode de référence (1) selon la revendication 1, **caractérisée en ce que** le deuxième électrolyte (7) est conçu sous la forme d'une solution saline de concentration définie.

3. Électrode de référence (1) selon la revendication 1 ou 2, **caractérisée en ce qu'**est disposée dans la deuxième chambre (6) une réserve (15) d'une liaison peu soluble d'une électrode de 2^{ème} type, dans laquelle pénètre au moins partiellement la zone de contact (9') de l'élément d'électrode.

4. Électrode de référence (1) selon la revendication 3, **caractérisée en ce que** le polymère non fluide est dépolymérisé avec la solution saline directement dans la zone de contact (9') de l'élément d'électrode (9).

5. Électrode de référence (1) selon l'une des revendications 1 à 4, **caractérisée en ce que** la première chambre (3) est formée par un premier tube d'une première section, et la deuxième chambre (6) d'un deuxième tube fermé vers le bas, d'une deuxième section, la deuxième section étant inférieure à la première section et le deuxième tube étant disposé de façon coaxiale à l'intérieur du premier tube

6. Électrode de référence (1) selon la revendication 5, **caractérisée en ce que** le deuxième tube est fermé vers le haut et l'ouverture (8) est formée dans la paroi (11) du deuxième tube.

7. Électrode de référence (1) selon la revendication 5 ou 6, **caractérisée en ce que** le premier tube est fermé vers le bas et le diaphragme (5) est formé dans la paroi (14) du premier tube.

8. Électrode de référence (1) selon l'une des revendications 5 à 7, **caractérisée en ce que** la deuxième chambre (6) est formée au sein de la paroi (11) du premier tube.

9. Électrode de référence (1) selon la revendication 8, **caractérisée en ce que** le piston, en tant que troisième tube fermé vers le haut, est formé avec une troisième section circulaire, qui est disposé de façon coaxiale dans le deuxième tube.

10. Électrode de référence (1) selon l'unes des revendications 5 à 7, **caractérisée en ce que** la deuxième chambre (6) est formée entre la paroi (14) du premier tube et la paroi (11) du deuxième tube.

11. Électrode de référence (1) selon la revendication 10, **caractérisée en ce que** la paroi (14) du premier tube est rendue étanche par rapport à la paroi (11) du deuxième tube.

12. Électrode de référence (1) selon l'une des revendications 1 à 11, **caractérisée en ce qu'**est disposée dans la première chambre (3) une barrière ionique (21), qui empêche une pénétration de poisons d'électrode de la solution de mesure (2) dans le premier électrolyte (4) ou un transfert d'ions de la deuxième chambre (6) vers le diaphragme (5).

13. Chaîne de mesure potentiométrique (16) destinée à la détermination de la concentration d'ions au sein d'une solution de mesure (2), la chaîne de mesure (16) comportant une électrode de mesure (17) et une électrode de référence (1), **caractérisée en ce que** l'électrode de référence (1) est conçue d'après l'une des revendications 1 à 12.

14. Chaîne de mesure (16) selon la revendication 13, **caractérisée en ce que** l'électrode de mesure (17) comporte un quatrième tube fermé vers le bas, avec une quatrième section circulaire, la quatrième section étant inférieure à la deuxième section et le quatrième tube étant disposé de façon coaxiale dans le premier tube et dans le deuxième tube, et sortant en bas du premier tube et du deuxième tube, la paroi (18) du quatrième tube étant rendue étanche par rapport à la paroi (14) du premier tube et/ou à la paroi (11) du deuxième tube.

15. Chaîne de mesure selon la revendication 13 ou 14, **caractérisée en ce que** les parois (11, 14, 18) des tubes sont fusionnées entre elles au niveau des zones rendues étanches.
